# NEW EUROPEAN PATENT SPECIFICATION

(11) **EP 1 836 063 B2**
(45) Date of publication and mention of the opposition decision: **20.05.2015**
(45) Mention of the grant of the patent: 27.05.2009
(21) Application number: 05825947.4
(22) Date of filing: 23.12.2005
(51) Int. Cl.: B60D 1/54

(54) **RETRACTABLE TOW HITCH**
EINZIEHBARE ANHÄNGEKUPPLUNG
ATTELAGE RETRACTABLE

(30) Priority: 24.12.2004 NL 1027877
(43) Date of publication of application: 26.09.2007
(73) Proprietor: Brink Towing Systems B.V., 7951 CX Staphorst (NL)
(72) Inventor: HARTMAN, Henk p/a Brink International B.V., NL-7951 CX Staphorst (NL); VELDMAN, Lefert p/a Brink International, NL-7951 CX Staphorst (NL); MARGADANT, Arnoud p/a Brink International B.V., NL-7951 CX Staphorst (NL)
(74) Representative: Hammond, Andrew David
(86) International application number: PCT/NL2005/000892
(87) International publication number: WO 2006/068478

(56) References cited:
- EP-A- 1 488 943
- DE-A1- 10 243 044
- DE-A1- 10 243 045

## Description

The invention relates to a retractable tow hitch, for passenger cars in particular, according to the preamble of claim 1.

Such a retractable tow hitch is known from EP-A-1,488,943. A similar retractable tow hitch is known from DE-A-102 43045.

Various types of retractable tow hitches are known. In general, the retractable tow hitches are movable between a position of use, in which the tow hitch extends rearward from the car, in longitudinal direction of the car, and a position of storage, shielded from the environment, extending in a plane substantially transverse to the longitudinal direction of the car.

In one type of retractable tow hitch, disclosed in DE-A-195.21.896, the tow rod is provided with the tow ball at one end and with a nose at the other end. The tow rod is provided with sideward projecting stubs that in the position of use operative position are received in recesses arranged in the lower edge of a vertical sleeve which is fixed to the car. At a location at the side of the stubs facing the ball end, the tow rod is attached to two vertical suspension rods, which are vertically movable. The sleeve is furthermore provided with an aperture for accommodation of the nose. When the tow hitch is to be moved from the position of use to the position of storage, the locking nose is released so as to permit the tow rod to tilt downward with its ball end, the stubs moving out of the recesses and the tow hitch being suspended from the suspension rods. As a result, the tow ball will assume a lowered position, below the level of the bumper of the car. Then the tow hitch is rotated about a vertical axis over 90 degrees, bringing the tow rod into an orientation transverse to the longitudinal direction of the car, in the position of storage. In this position of storage, the tow rod is held in position by suspension from the suspension rods, allowing the tow rod some freedom of movement in a vertical plane perpendicular to the stubs. In addition, in the position of storage, the tow ball remains at a relatively low level.

A further embodiment is disclosed in German patent application 10004523, in which a tow rod provided with a ball is attached to a vertically extending rod, which rod can be rotated about a vertical axis and can be moved up and down. The lower end of the slidable rod must be moved to a level enabling an unhindered passage underneath the bumper during rotation of the tow hitch between an orientation transverse to the longitudinal axis of the car and a rotation parallel to the longitudinal axis of the car.

In another type of retractable tow hitch, the tow rod has a vertically extending mounting portion which is accommodated in a vertical housing secured to the car so as to be slidable up and down as well as to be rotatable about a vertical axis over 90 degrees. When being moved from the position of use to the position of storage, the tow rod is lowered, then rotated about an angle of 90 degrees and finally raised. In order to permit an unimpeded movement of the tow ball underneath the bumper, the distance over which the tow rod is lowered must be rather large, with the same consequences for the length of the tow rod portion and its vertical guide.

It is an object of the invention to provide a retractable tow hitch of simple construction.

It is another object of the invention to provide a retractable tow hitch that is easy to be transferred from the position of use to the postion of storage and back again.

It is an object of the invention to provide a retractable tow hitch that can be brought into the position of use in a simple and safe manner.

The invention provides a tow hitch assembly according to claim 1.

Thus a retractable tow hitch assembly has been provided in which the locking mechanism for the position of use is separated from the movable connection to the holder device, wherein nevertheless a movable coupling part is carried by the tow hitch member.

In one embodiment, the first coupling part includes a coupling rod which may be slidingly accommodated in the tow hitch rod and has a coupling end which is movable, with respect to the tow hitch rod, between a retracted position and an extended, coupling position cooperating with the second coupling member of the holder device. To enhance the coupling action, the coupling rod may be biassed towards the extended position.

Advantageously, the first and second coupling members are adapted to be brought into coupling engagement with each other during an end phase of the movement of the tow hitch member into the position of use, due to which the operation is kept simple.

The first coupling member may include a profile, such as recess, formed at the proximal end and relatively stationary with respect to the tow hitch rod, said profile being shaped to engage behind a portion of the second coupling member for coupling purposes.

At the location of suspension the tow hitch rod at a tow hitch rod connection is rotatably, such as by a hinge, connected to the holder device so as to establish the coupling engagement between the first and second coupling members by a canting movement of the tow hitch rod, preferably by exerting a downward force on the ball. Such a hinge may have a hinge pin which extends through the tow hitch rod and is provided with a passage for the movable coupling part. The hinge may have a hinge axis which has a dominant directional component in horizontal direction, preferably substantially horizontal.

In one futher development, the hinge is a ball hinge.

The tow hitch rod connection is linearly movable, preferably straight linearly movable, with respect to the holder device. The tow hitch rod may be movable in a direction having a dominant directional component in vertical direction, preferably substantially vertical.

In general, at the suspension location the tow hitch rod may be rotatable about an axis having a dominant directional component in vertical direction, such as substantially vertical.

Alternatively, the axis may be inclined to the vertical, preferably in a plane parallel to the longitudinal vertical plane of symmetry of the vehicle to assist the movement towards the position of use, in one approach, or to assist the movement towards the position of non-use (opposite inclination).

In a further embodiment, the tow hitch assembly comprises a locking assembly for locking the tow hitch rod in the position of non-use. The locking assembly may include a first locking part arranged on the tow hitch rod at a location on the tow hitch rod spaced from the first coupling member, preferably between the location of suspension and the tow hitch ball. Such a locking assembly may be easy to reach by hand. In addition, space available on the tow hitch member is used.

The locking assembly may comprise a release mechanism. This release mechanism may be electro-magnetically operated. Alternatively, in a simple and low-cost embodiment, the release mechanism includes a hand-operable lever.

In a simple embodiment, easy to install on a vehicle, the release mechanism is arranged at a location which can be reached from the outside of the vehicle.

In a further development, the tow hitch assembly comprises an operation member, such as a turning knob, on the tow hitch rod for moving the coupling part to the retracted position, wherein preferably the operation member is arranged on the tow hitch rod at a location between the location of suspension and the tow hitch ball.

In a further embodiment, in its retracted position the coupling part is biased towards the extended position, wherein the two hitch rod is provided with a release mechanism cooperating with the holder device to trigger the release of the coupling part to permit its movement towards the extended position under the influence of the biasing force.

The invention will be elucidated on the basis of an exemplary embodiment shown in the drawings, in which:
Figures 1A, 1B and 1C show a cut-away view on a bumper or rear cross-profile of a passenger car (not shown) a view according to arrow IB in figure 1A, and a view according to arrow IC in figure 1B, respectively;
Figure 2 shows the arrangement of figure 1A, in a first stage of pulling out the tow hitch;
Figures 3A and 3B show views corresponding to views of figures 1A and 1B, respectively, in a second stage of pulling out the tow hitch;
Figure 4A and 4B show views corresponding to views of figures 1A and 1B, respectively, in a third stage of pulling out the tow hitch;
Figure 5 show a view similar to the view of figure 1A, in a fourth stage of pulling out the tow hitch;
Figures 6A and 6B show views corresponding to views of figures 1A and 1B, respectively, in a fifth stage of pulling out the tow hitch;
Figure 6C shows a detail of the coupling end of the tow hitch in the stage of figures 6A,B;
Figures 7A and 7B show views corresponding to views of figures 1A and 1B, respectively, in a sixth stage of pulling out the tow hitch;
Figure 7C shows a detail of the coupling end of the tow hitch in the stage of figures 7A,B;
Figures 8A and 8B show views corresponding to views of figures 1A and 1B, respectively, in a seventh stage of pulling out the tow hitch;
Figures 9A and 9B show the end stage of pulling out or the stage of use of the tow hitch;
Figure 10 shows a schematic side view on a tow hitch assembly according to the invention, in a slightly modified form;
Figure 11 exploded view of a second exemplary embodiment of the tow hitch assembly according to the invention;
Figures 11A and 11B show a bearing and locking housing in an isometric view and a vertical cross section, respectively;
Figures 12A-D stages in partly cut away side view during the coupling stage in the position of use of the tow hitch assembly of figure 11 respectively, and a top view on situation of figure 12C; and
Figure 13 a schematic view on the movement of the tow hitch member/bar and a further embodiment according to the invention, from the position of use to the position of storage.

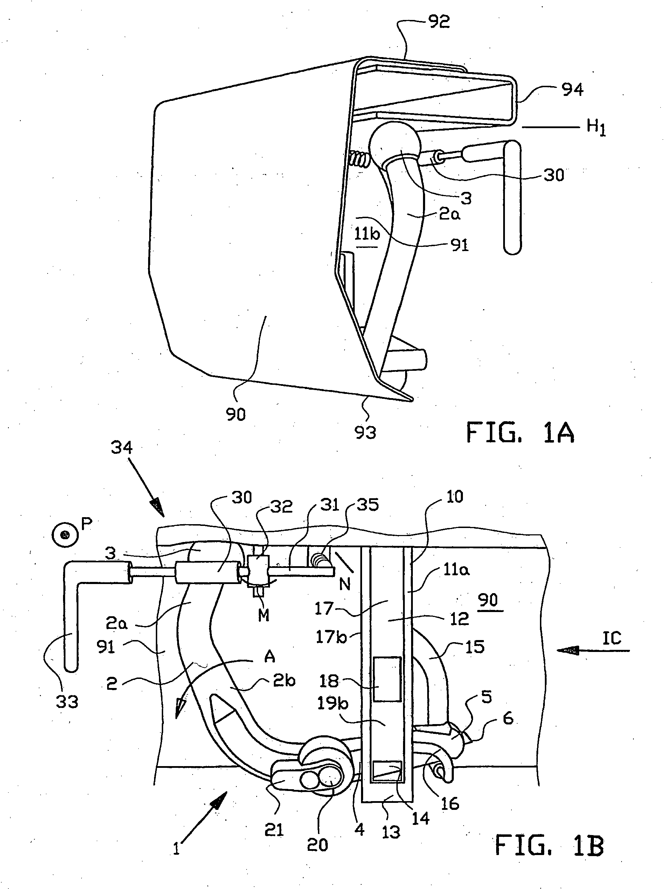

Figures 1A,B show a portion of a bumper 90 made of, for instance, steel plate, providing a hollow space 91 which is being used for storage of a tow hitch assembly 1 in the position of rest or inoperative position. An upper wall 92 of the bumper 90 has been attached to a cross beam 94 attached to the rear of the passenger car (not shown). The bumper 90 has a lower edge 93. In figure 1A the level of the upper surface of ball 3 has been indicated by plane H1. The beam 93 may be, alternatively, a mounting beam for mouting the tow hitch assembly to a vehicle.

The tow hitch assembly 1 comprises a tow hook or tow hitch member 2, which is provided with an upturned neck portion 2a, which is provided with a ball 3. The neck portion 2a merges into base portion 2b, which merges into upturned portion 4. The upturned portion 4, the base portion 2b and the upturned portion 2a define a general U-shape. The outer end of the upturned portion 4 is designed as coupling end 5, including a reciprocally movable coupling or locking rod 6, which with a certain length is accommodated in the coupling end 5 so as to be reciprocally movable therein, as is generally known for coupling ends of detachable tow hitch assemblies (vide for instance EP-A-0.950.549 or EP-A-0.223.996). In the position depicted in figure 1B, the coupling end is out of function, and the coupling rod 6 is in an extended, coupling position, due to the bias force of a compression spring (not shown) accommodated in the coupling end 5. Inside the upturned portion 4 an operating mechanism is located for ejecting and retracting the coupling rod 6, which operating mechanism can be operated by means of operating knob 20 which can be turned by engaging a handle 21 on the knob by hand.

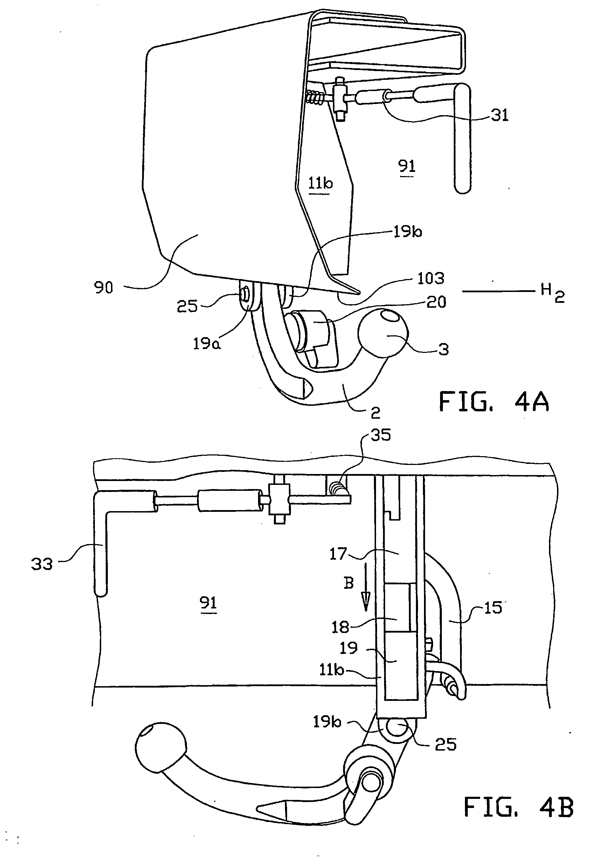

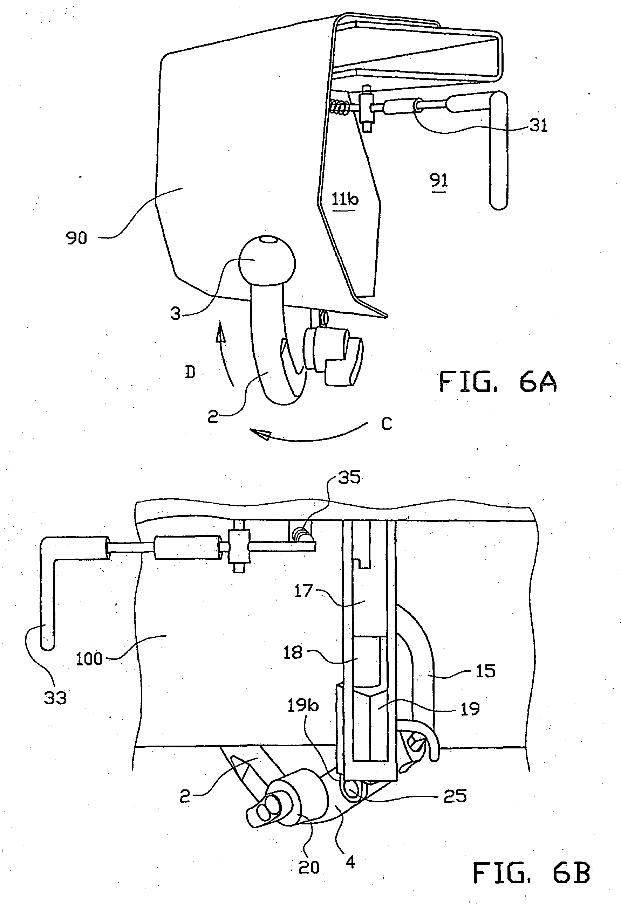

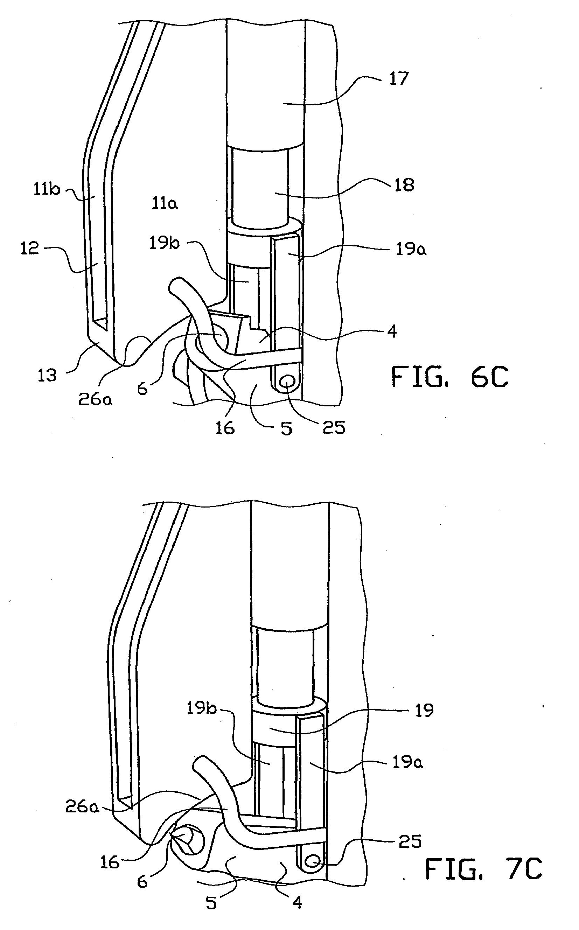

At a location between the knob 20 and the coupling end 5, the upturned portion 4 is attached by means of two sideward projecting stubs (vide for instance figure 4A), to two vertical plates 19a, 19b engaging on either side of the rod portion 4. At their upper ends the vertical plates 19a, 19b are attached to a block 19, which is attached to a vertical rod 18, which is vertically slidable in sleeve 17 (vide for instance figure 6C) which is fixed to the beam 94. The sleeve 17 is provided with an L-shaped slot (not shown), in which a pin-shaped cam attached to vertical rod 18 and projecting radially therefrom is guided.

In the position of storage, depicted in figure 1B, the ball 3 is held in place by means of a mechanism 34, having a support sleeve 30 for the ball 3, which sleeve 30 is mounted on a locking rod 31, which locking bar 31 is suspended from a hinge 32 so as to be rotatable about a vertical axis in directions M. At one end, the rod 31 is attached to one end of a compression spring 35 which urges the rod end in a direction, to the front, away from the rear bumper 90. At the other end, the rod 31 is provided with a handle 33 for the hand of a user. In the locking position depicted in figures 1A-C, the ball 3 is locked in place by being clamped between the sleeve 30 and the upstanding wall of the bumper 90.

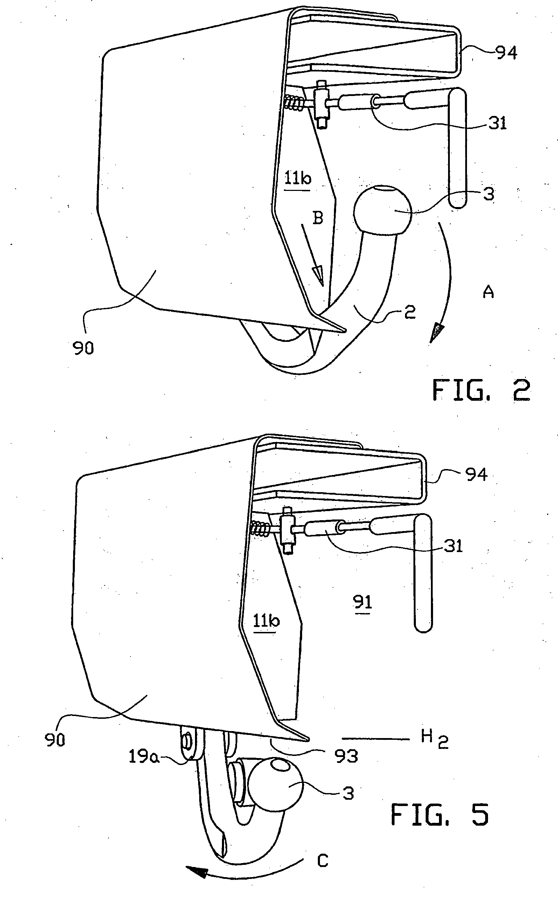

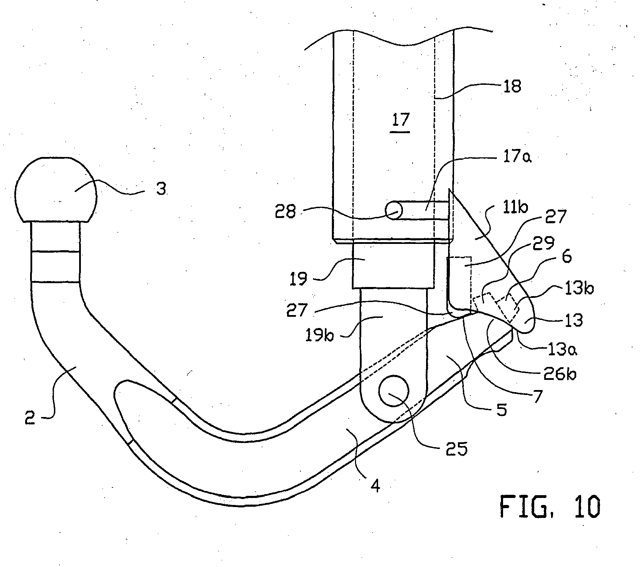

The tow hook 2, the vertical plates 19a, 19b and the vertical rod 18 form one unity which is rotatable about vertical axis S, concentric to rod 18. This rotation of rod 18 is limited by the pin on the rod 18 in the horizontal leg of the L-shaped slot in sleeve 17. An example is shown in figure 10, vide pin 28 on rod 18 and slot 17a in sleeve 17. In addition, this rotatable unity is slidable with respect to the sleeve 17 in a direction parallel to axis S. The vertical movement of the rod 18 is limited by the pin on the rod 18 in a vertical leg of the L-shaped slot in the sleeve 17. Furthermore, the tow hitch 2 is rotatable about horizontal hinge axis T (figure 5).

Attached to the -with respect to the longitudinal edges of the car- front side of the sleeve 17 are two vertical plates 11a, 11b, which define a vertical space 12 between them. This space 12 is limited downward by bar 13. Bar 13 forms part of a stationary locking part, designed for coupling cooporation with the coupling end 5 with reciprocal locking rod 6 in the position of user of the tow hook 2.

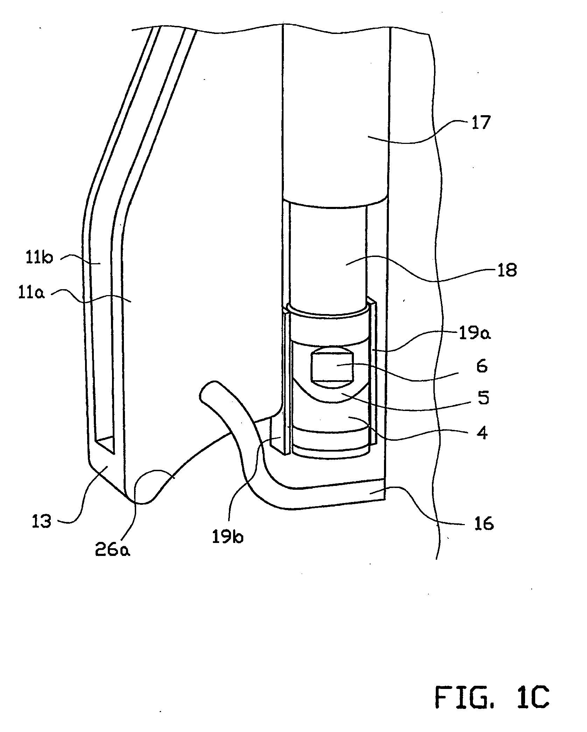

The lower edges 26a, 26b of the plates 11a, 11b are curved, as can be seen in figures 1C, 6C and 7C, the edge 26a of the plate 11a forms a guiding edge for the coupling end 5.

In the position of the tow hitch assembly depicted in figure 1B the tow hook 2 is in the aforementioned first secondary orientation, and in the first position, the vertical rod 18 being in retracted position.

In case the user of the passenger car wants to make use of the tow hook 2, he operates the locking mechanism 34 electronically, by remote control, or by hand, for instance by engaging the handle 33 and urging the handle 33 towards the front in direction P (figure 1B) . As a result, the rod 31 will be rotated about the hinge 32 and the other rod end will be moved in direction N towards the bumper 100 counter the force of spring 35. Thus, the sleeve 30 will be moved away from the ball 3, so that the ball 3 is released. Due to the weight of the tow hook 2 (it can be seen that the largest part will be on the left-hand side of the hinge 25, figure 1B), the tow hitch rod will cant about hinge 25 in a direction A. This canting movement in a direction A will be accompanied by a downward sliding movement of the rod 18, due to which the level of the hinge 25 will be lowered (arrow B).

After the ball 3 has been released, the spring 35 urges the rod 31 to rotate back to the previous locking position.

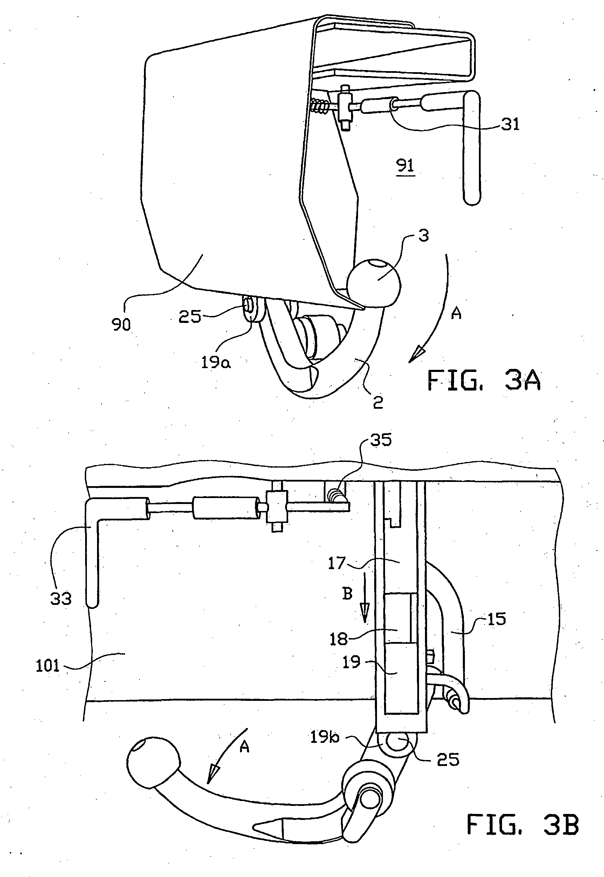

As a result of the canting movement in a direction A the coupling end 5 will move upward, and will be received in the aforementioned U-shaped space defined between block 19 and vertical plates 19a, 19b, as indicated in figure 3B. The dimensions have been chosen such that the coupling end 5 and/or coupling rod 6 abut the guiding edge 26a, so that the tow hook 2 will not cant further in the direction A when having reached the orientation depicted in figure 4B, the primary orientation in which the rod 18 is in the fully extended position, limited by the abutment of the aforementioned pin on rod 18 in the L-shaped slot in sleeve 17.

As can be seen in figure 3B, the ball 3 is below a plane H2, which plane contains the lower edge 103 of the bumper 90.

The ball 3 having been lowered until below the lower edge 93 of the bumper 90, can be engaged by the user by hand, and be pulled towards the user, due to which the tow hitch 2 and the rod 18 will be rotated in the direction C about axis S, vide figure 5 and following.

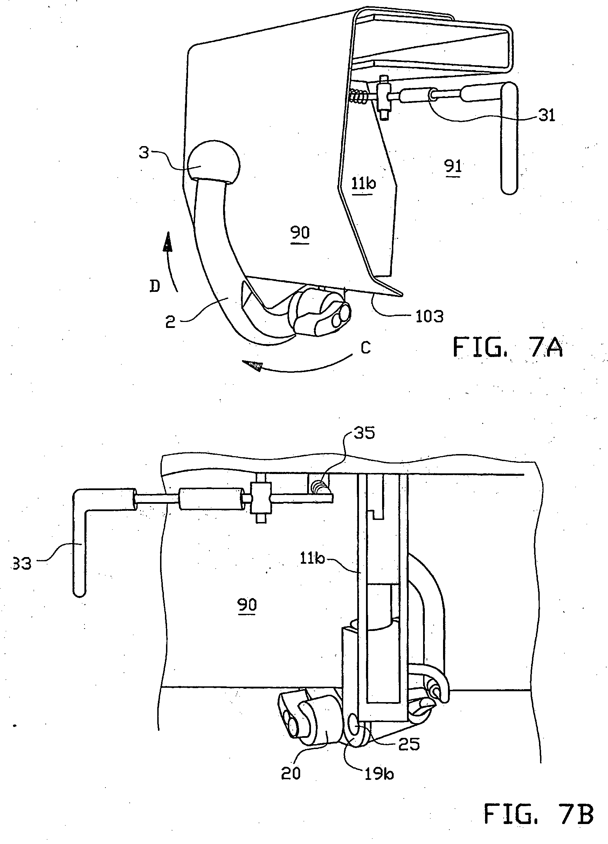

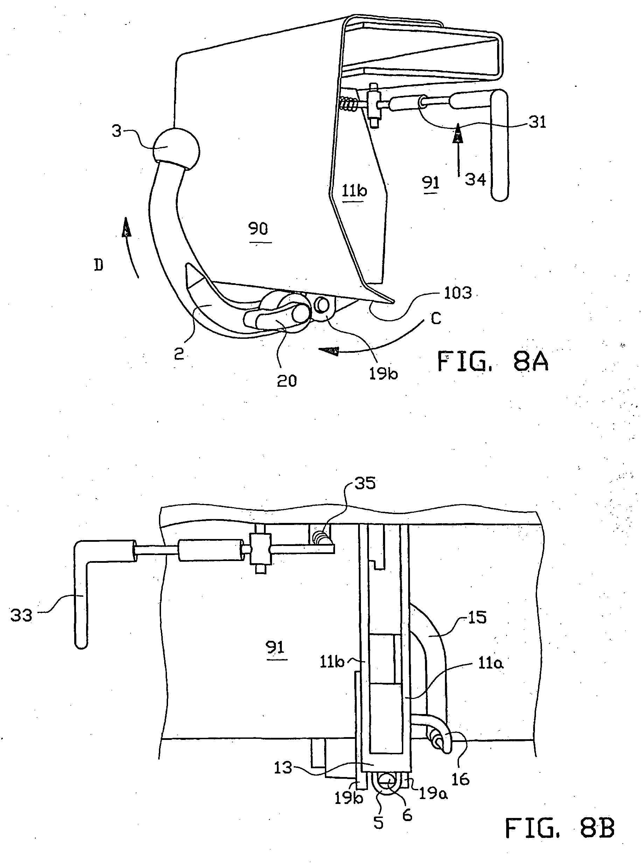

The lower edges 26a, 26b of the plates 11a, 11b are curved, as can be seen in figures 1C, 6C and 7C, so as to enable an undisturbed canting movement of the coupling end 5. As can furthermore be seen in figures 6C and 7C, the edge 26a of the plate 11a forms a guiding edge for the coupling end 5, urging the coupling end 5 downwards at continued rotation of the tow hook 2 about axis S. As a result, the ball end 3 of the tow hook 2 will be urged upward, hinging about hinge axis T, in a direction D (vide the subsequent movements illustrated in figures 5, 6A, 6B, 7A, 7B, 8A and 8B). In the position depicted in figures 8A, 8B the ball 3 has reached its highest level, in which the coupling end 5 with the coupling rod 6 abuts the bar 13. The tow hook 2 is now in the second secondary orientation, in the second position. In the position depicted in figures 8A and 8B the tow hitch is in a stand-by position, ready to be coupled. The engagement of the coupling rod 6 with the bar 13 is such, that the tow hook 2 will not tend to move back to the position of figure 7A and previous positions without being urged thereto by external force, such as by hand.

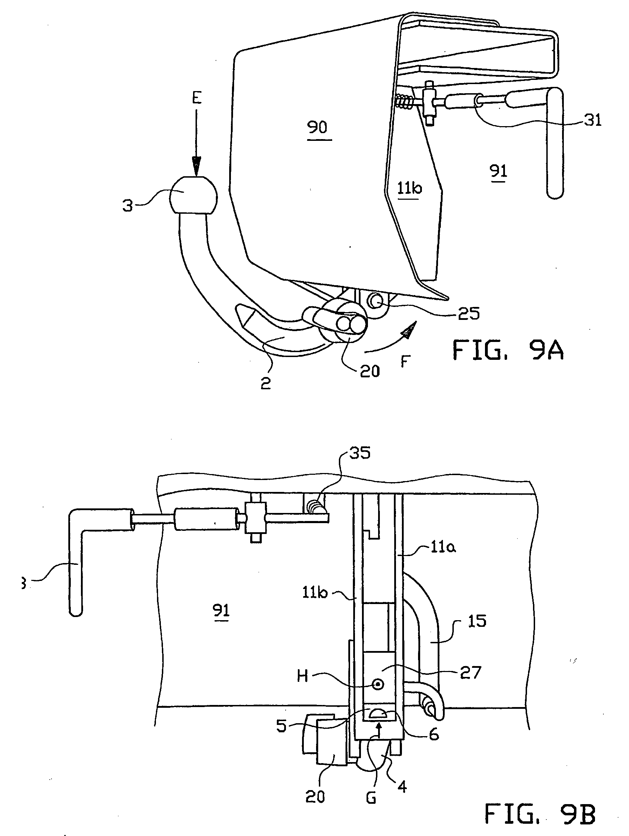

When the user exerts a downward force on the ball 3, by hand, the end of the coupling rod 6 will be pushed in by the edge of the bar 13, counter the force of the spring accommodated in the coupling end 5, and subsequently the end of the coupling rod 6 will reach a level higher than the rear edge of the bar 13, as a result of which the spring force can become effective by urging the coupling rod 6 outward to some extent, so that the coupling rod 6 and the coupling end 5 are brought into coupling engagement with the stationary coupling members at the lower end of space 12. Thus the situation depicted in figures 9A, 9B has been reached, in which the tow hook is in the third secondary orientation, and is ready for use.

A possible locking arrangement has been depicted in figure 10, in which, in a known manner, the coupling end 5 has a recess 7 that engages about the lower and front and rear sides of a locking bar 27, which like bar 13 is fixed to plates 11a,b, which in this embodiment have smaller dimensions than in the embodiment of the preceding figures, and forms a stationary locking or coupling member of the coupling. In the aforementioned stand-by situation, the locking rod end 6 abuts the lower side 13a of bar 13, and when the force in the direction of E is exerted on the ball 3, an inward force will be exerted on the locking rod 6 counter the spring force. After having passed the lower side 13a, the rod 6 will be able to snap in the locking space 13b formed at the rear side of bar 13, while at the same time the recess 7 engages about the bar 27. Then, the coupling end 5 of the tow hitch 2 is locked to the stationary locking member.

In case the tow hitch member 2 is to be moved back to the position of storage again, the user takes the knob 20 and by exerting a force on handle 21 rotates the knob 20 so as to pull in the coupling rod 6 again for releasing the coupling. Then he urges the ball 3 upward to some extent, to reach the position of figure 8A, and then the user can move the tow hitch back, through the consecutive stages depicted in figures 7A, 6A, 5 and 4A. This movement is guided by the engagement between the lower edge 26a and the coupling end 5, and assisted by the gravity forces exerted on the tow hook 2, canting about hinge 25.

A rotating movement about axis S beyond the position of figure 4B, 3, 2 and 1B, is prevented by vertical guiding plate 15.

The user can then place his hand at the lower surface of base portion 2b, and urge the tow hitch portions 2a, 2b upward until the ball 3 has reached the level H1 and can be engaged by sleeve 30, for instance after snapping action. The sleeve 30 can give way to the upward moving ball 3 and move back under the ball 3, due to the spring 35. During the upward canting of the tow hook 2 the coupling end 5 is supported on bar 16 so as to provide a pivot point.

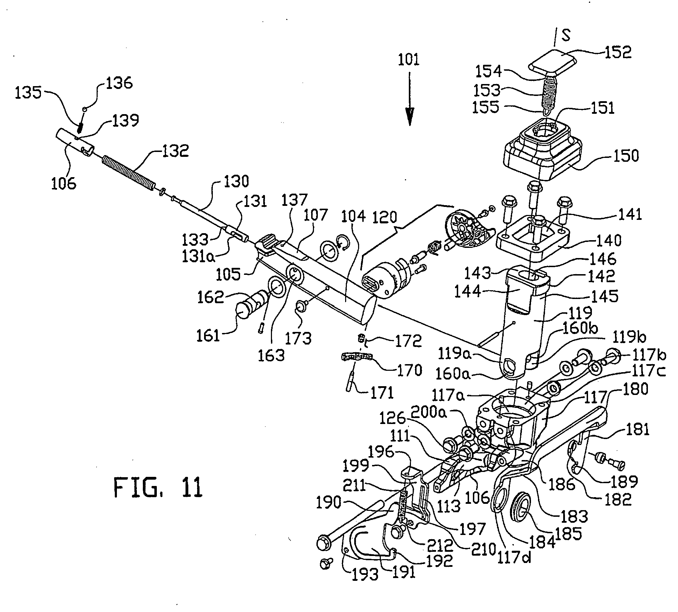

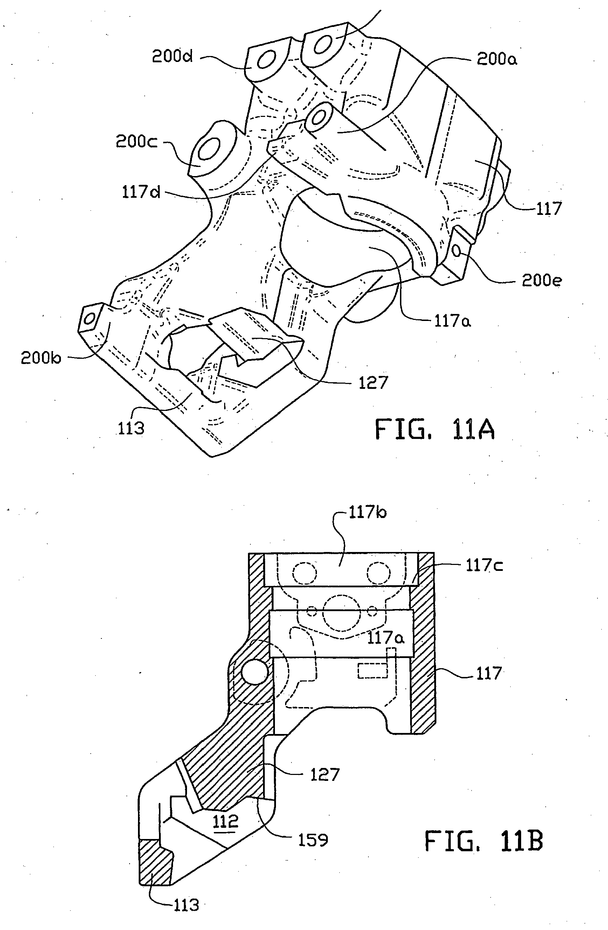

The tow hitch assembly 101 of figure 11 has a bearing housing 117 having a straight circular cylinder bore 117a for accomodation of an elongated block 119 which has a circular cross section. The upper portion of the bore 117a is widened at 117b, forming a shoulder 117c. At its lower end, the rod 119 is provided with two depending lugs 119a,b, which are provided with holes 160a,b. At its upper end, the rod 119 is narrowed having two opposite flat, parallel vertical faces 144 which in circumferential direction are connected to each other by circular surfaces 145. In upward direction, the surfaces 145 are limited by shoulders 143. The upper surface 142 of the rod 119 is flat and extends perpendicular to the main extension of the rod 119. Surface 142 is provided with a hole 146 extending into the rod 119 for accomodation of a tension spring 153, which by its lower end 155 is attached at the bottom of the hole 146. The top end 154 of the spring 153 is attached to a cover plate 152 of a cover part 150, which is provided with an aperture 151. The cover part 150 covers a ring 140 which is bolted to the bearing house 117 and is provided with an aperture 141 of a shape similar to the upper end 142, 143 of the rod 119, in particular unround. The tension spring 153 extends through the apertures 151, 141.

In figure 11, the tow hitch member 102 is only partly shown. The tow hitch bar 104 has an inner or proximal end 105, having a nose 129 and a recess 107 at the upper side, and an end lip 156 and a concave recess 157 at the lower side. In addition, the upper side is provided with a hole 137, accomodating a vertically movable trigger pin 138. The hole 137 extends into a longitudinal bore 169 in the tow hitch bar 104. The lower side is provided with a hole 140 for drainage of water entered in the bore 169.

The bore 169 accomodates a coupling rod 130 which at its outer end is provided with a coupling member 106 having an inclined lower face 106a. At its upper side, the coupling end 106 is provided with a vertically extending bore 139 accommodating a compression spring 135 and eventually a ball 136.

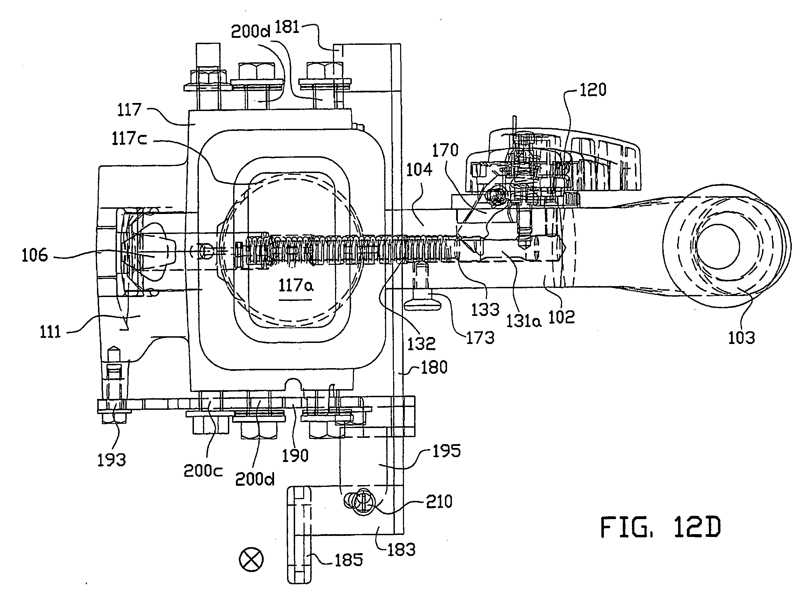

The coupling rod 130 extends through a compression spring 132, which at one end 130a is received in a recess 106b in the coupling end 106 and at its other end supports against a shoulder 133 on the rod 130. The end 130a is narrowed to secure it in a manner not shown to the coupling end 106. The opposite end is widened at 131 and provided with a sideward extending aperture 131a. Aperture 131a cooperates with a lever 170 which by pivot pin 171 and torsion spring 172 is mounted in an operation knob 120, shown in exploded view, but not further described here. Figure 12D shows that the lever 170 extends into the aperture 131a. By turning the knob 120, this is to say its outer part, a mechanism provides for canting of the lever 170 which by engagement of the widened end 131 permits retraction of the coupling rod into the bore 169 of the tow hitch bar 104 in order to decouple the tow hitch bar from the position of use.

Examples of similar detachable couplings are shown in EP-A-0.934.838, EP-A-1.526.010, EP-A-1.539.511 and NL-A-1008215.

At the side opposite the operation knob 120, the tow hitch bar 104 is provided with a locking knob 173.

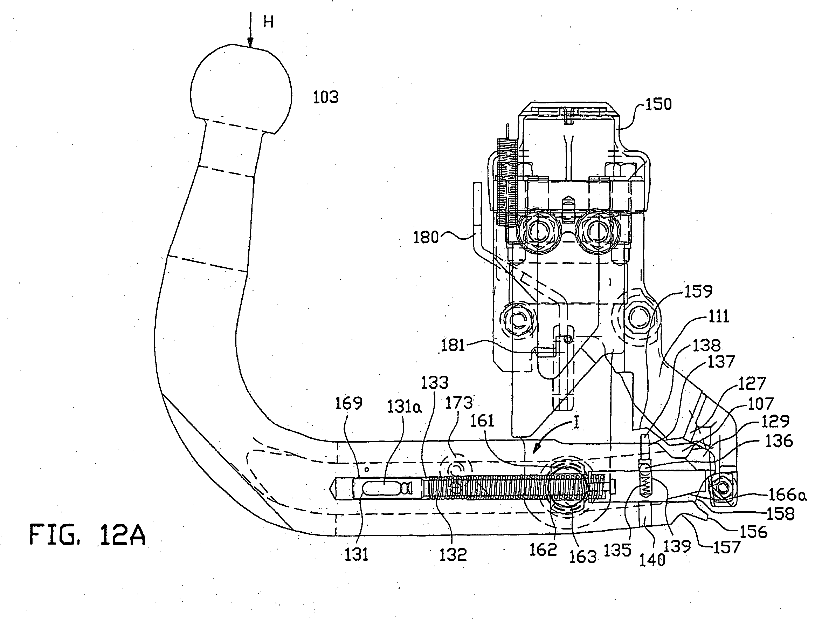

The tow hitch bar 104 is furthermore provided with a sideward extending hole 163, accomodating a pivot pin 161 which is provided with a through-hole 162. Through-hole 162 provides passage for the coupling rod 130 and spring 132, as can be seen in figures 12A-C.

The housing 117 is formed as a whole with coupling extension 111, comprising a recess or an aperture 112 which is upwardly limited (vide also figures 11A, 11B and 12A-C) by a lintel 127 and downwardly limited by a threshold 113.

The housing 117 is provided with holes 200c,d for bolts (shown without reference numbers in figure 11) for securing the housing 117 to a holder/mounting cross bar for attachment to a vehicle.

At one side, the bearing housing 117 is provided with fastening holes 200a, 200b, for attachment of a plate 190 which is provided with fastening holes 193a,b. The plate 190 is provided with a nose 197 at its lower end, and with an upstanding strip 196 turned into lip 195 which is provided with a hole 196 for attachment of the upper end 211 of a tension spring 210. The nose 197 forms part of a kind of leaf spring 198, realized by the curved incision in plate 190. The lower end of tension spring 212 is attached in a hole 186 in a strip 183 of an operation lever 180, which is provided with a depending strip 181 having a hole 182 for rotatable attachment to the front side of the housing 117 (at 200c, figure 11A) and a recess 189. The other end of the lever 180 has a depending strip 183, which is offset, and has a finger aperture 184 in which a ring 185 has been mounted.

The lever 180 can extend through a vertical slit 197 in upper strip 194 of plate 190 so as to be movable therein.

In the assembled condition of the tow hitch assembly of figure 11, the tow hitch bar 104 will in the position of storage assume a position which is more or less perpendicular (as seen in a horizontal plane), to the orientation of use shown in figure 11. In that case, the unround upper end 142, 143 of the rod 119 will have been able to pass upwardly through aperture 141. In the position of storage, the knob 173 will be received in locking recess 189. The lower outer end of tow hitch bar 104, in particular lip 156 and recess 157, will find support on nose 197 of plate 190. The upper side 107 of the tow hitch bar 104 will furthermore upwardly abut against projection 117d of housing 117. In addition, a rotation about vertical axis S is prevented by the form-closed matching of upper end planes 144, 145 in aperture 151. Due to the resiliency of the leaf spring 198 a rattling of the tow hitch member 102 in the position of storage during driving will be prevented.

In case the user wants to transfer the tow hitch assembly 101 from the position of storage to the position of use, he puts his finger into the ring 185 while exerting a downward force G on the lever 180. As a result, the locking recess 189 will move away from the locking knob 173. Due of the fact that the mass at the ball side of the tow hitch member 102 with respect to the pivot pin 162 is larger then the mass at the other side, the tow hitch bar will cant downwards at the side of the tow hitch ball 103. At the same time, the rod 119 will move downward through the bore 117a, the tension spring 153 breaking the fall of the rod 119.

The tow hitch member 102 will then be able to assume the position corresponding to figure 4B, in which the hinge 161 is in the lower position and the user can easily grasp the ball 103 with his hands. During the downward canting of the tow hitch member 102, the rod 119 will have moved downward, during which movement the upper end 142 of the rod 119 will pass through aperture 141. After the full passage of the upper end 142 through aperture 141, the shoulders 143 will be received in narrowed space 117b, and stopped from further downwards movement by the shoulder 117c. Then the shoulders 143 are vertically confined between the ring 140 and the shoulder 117c.

By pulling the ball 103 towards him the user rotates the tow hitch member 102 about vertical axis S towards an orientation in a vertical plane coinciding with the vertical longitudinal plane of the vehicle. In that movement, the upper inner end 105 of the tow bar 104 will be guided by curved guiding edge 126 on extension 111 of housing 117. Finally, the tow hitch member 102 assumes the position corresponding to the one of figure 8A. In that position, the situation of figure 12A has been reached. The nose 129 abuts against lower end of lintel 127 and the inner end of the curved edges 158 of the inner end 105 abut against the upper end of the threshold 113.

Figure 12A shows furthermore that the coupling rod 130 is retracted, the ball 136 extending within the bore 137, the trigger pin 138 projecting above the inner end 105.

By exerting a downward force H on the ball 103, the tow hitch bar 102 will be subjected to a rotating movement I about pin 162. Due to the confinement between the ring 140 and shoulder 117c and the shoulders 143, the pivot pin 162 will stay at that level.

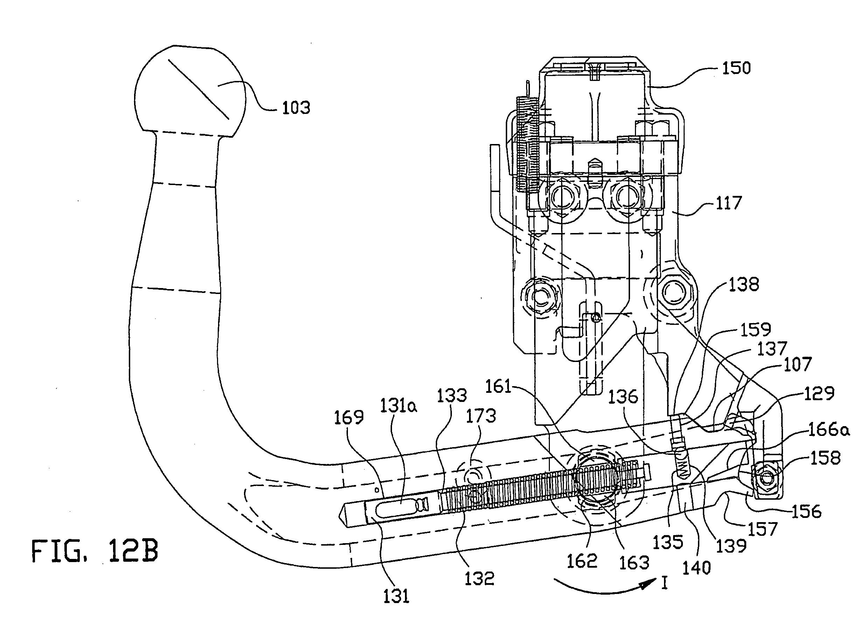

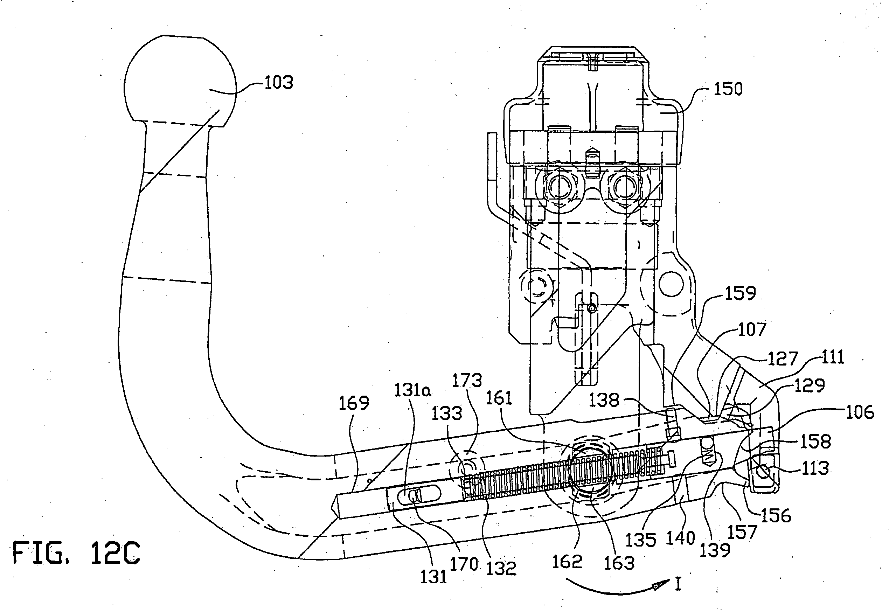

The inner end 105 of the tow hitch bar 104 will move upward, whereby due to the inclined faces of the recess 107 the lintel 127 will enter the recess 107 and the nose 129 will pass to the inner side of the lintel 127 (figure 12B). The lip 156 will abut against the rear surface of the threshold 113. At the same time, the trigger pin 138 will come into abutment with lower abutment surface 159 on extension 111, whereby the ball 136 will be forced downward against the tension of the spring 135, and enter the coupling end 106. When the ball 136 has fully entered the hole 139, the coupling end 106 is freed to move outward from the inner end 105 under the influence of compression spring 132. The inclined lower surface 156 of the coupling end 106 moves over threshold 113 so as to lock by wedging the inner end 105 between the bar 127 and the threshold 113, as shown in figures 12C,D. In this position the tow hitch member 102 is locked in the position of use.

The movement of the tow hitch member 102 from the position of use to the position of non-use/storage takes place in reverse order, starting with operating the knob 120 for retrating the coupling member 106. At the end of the movement, the knob 173 will snap into the recess 189.

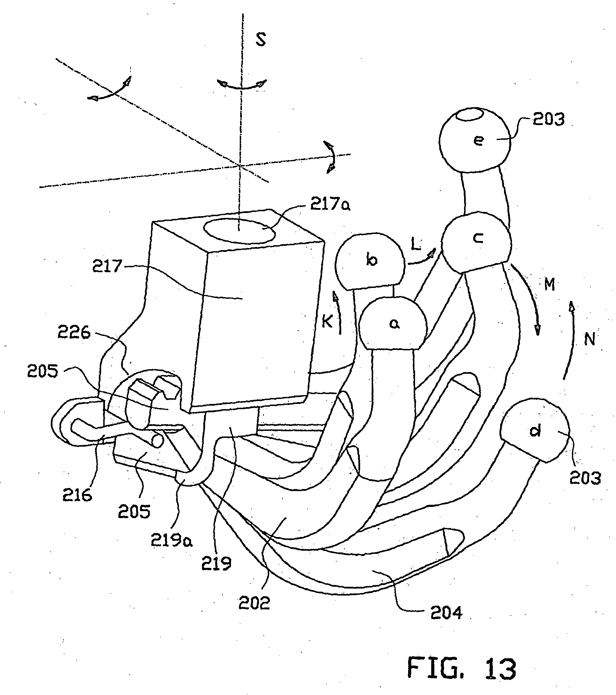

In figure 13, a schematic sequence of a movement of a tow hitch member 202 in a third embodiment according to the invention is shown, from the position of use to the position of storage. The tow hitch member 102 is mounted in a similar way as the previous embodiment in a bearing housing 217 having vertical bore 217a. A rod 219 is vertically slidable within bore 217a and has lugs 219a through which a pivot pin (not shown) extends for a pivoting connection of the tow hitch member 202 to the rod 219.

In position a the tow hitch member 202 is locked in a way similar to the locking in the position of use of the previous examples. By turning the knob 20, 120, the coupling rod can be retracted so as to release the inner end of the tow hitch member 202. By turning the knob 20, 120 to a sufficient extent, the coupling rod will be locked in the retracted position in a manner not further explained. Then the user pushes the ball 203 upward to the position indicated at b. The inner end 105 can now be moved by hand, resulting in a turning movement of the tow hitch member 102 in a direction L about axis S to the position indicated with c. The tow hitch member 202 can then be released, and will cant (M) by its own weight to the position indicated with d, the inner end 105 being guided by edge 226. The tow hitch member 202 will then have been rotated about S, the shoulder 143 turning within the widened bore 117b. The tow hitch member 102 will assume an orientation transverse to the longitudinal vertical plane of the vehicle, and will have been passed under the crash beam or bumper (not shown). Finally, the user can push (N) the ball 203 upward to the position indicated with e, in which the inner end 105 will be supported on rod 216 providing a canting support and the rod 219 will be translated upward, wherein the shoulder 143 passes upward through the aperture 141. In the position e the locking of the tow hitch member 202 in the position of storage is realised by means not further shown.

The tow hitch assembly described and shown, and according to other possible embodiments of the invention, forms a combination of tow hitch rods of tow hooks provided with coupling ends cooperating with stationary coupling members, as known from various detachable tow hitch systems, such as the ones according to EP-A-0.950.549 or EP-A-0.223.996 on the one hand, and a permanently but movably attached tow hitch bar, on the other hand.

In principle, the tow hitch assembly may be moved, coupled and uncoupled by hand and/or hand-operated mechanisms, to be operated from, in particular, the rear side of a vehicle. Special mounting preparations in or adaptations to the vehicle, such as operation members in the (trunk of the) vehicle, are not necessarily required.

## Claims

1. Tow hitch assembly (1) comprising a tow hitch member (2) having a tow hitch rod with a proximal end and a tow hitch ball (3) at a distal end, and a holder device for the tow hitch member, wherein the holder device is to be directly or indirectly mounted to a vehicle, such as a passenger car, wherein the tow hitch member (2) is movable between an extended position of use, substantially parallel to the main or driving axis of the vehicle, and a retracted position of non-use, at an angle to the position of use, transverse as seen in a horizontal plane to the position of use, **characterized in that** the tow hitch member (2) is movably suspended to the holder device at a location between the proximal end and the distal end to form a tow hitch rod connection which is linearly movable with respect to the holder device, wherein the proximal end of the tow hitch rod and the holder device are provided with first and second coupling members designed for locking cooperation with each other in the position of use, wherein the first coupling member includes a first coupling part that is movable with respect to the tow hitch rod between a retracted, non-coupling position and an extended, coupling position, wherein the first coupling part (6) is movable within the tow hitch rod between a retracted, non-coupling position and an extended, coupling position, wherein the row hitch rod at the tow hitch connection is rotatably connected to the holder deice so as to establish the coupling engagement between the first and second coupling members by a canting movement of the tow hitch rod, preferably by exerting a downward force on the ball..

2. Tow hitch assembly (1) according to claim 1, wherein the first coupling part includes a coupling rod (6) which is slidingly accomodated in the tow hitch rod and has a coupling end which is movable, with respect to the tow hitch rod, between a retracted position and an extended, coupling position cooperating with the second coupling member of the holder device, wherein, preferably, the coupling rod is biassed towards the extended position.

3. Tow hitch assembly (1) according to claim 1, or 2, wherein the first and second coupling members are adapted to be brought into coupling engagement with each other during an end phase of the movement of the tow hitch member into the position of use.

4. Tow hitch assembly (1) according to any one of the claims 1-3, wherein the first coupling member includes a profile formed at the proximal end and relatively stationary with respect to the tow hitch rod, said profile being shaped to engage behind a portion of the second coupling member for coupling purposes.

5. Tow hitch assembly (1) according to claim 1, wherein the tow hitch rod connection is formed by a hinge (25).

6. Tow hitch assembly (1) according to claim 1 or 2 and 5 wherein the hinge has a hinge pin (161) which extends through the tow hitch rod and is provided with a passage (162) for the movable coupling part (130).

7. Tow hitch assembly (1) according to claim 5 or 6, wherein the hinge has a hinge axis which has a dominant directional component in horizontal direction, preferably substantially horizontal.

8. Tow hitch assembly (1) according to claim 5, 6 or 7, wherein the hinge is a ball hinge.

9. Tow hitch assembly (1) according to claim 1, wherein the tow hitch rod is movable in a direction having a dominant directional component in vertical direction, preferably substantially vertical.

10. Tow hitch assembly (1) according to any one of the preceding claims, wherein at the suspension location the tow hitch rod is rotatable about an axis having a dominant directional component in vertical direction, such as substantially vertical.

11. Tow hitch assembly (1) according claim 9, wherein the axis is inclined to the vertical, preferably in a plane parallel to the longitudinal vertical plane of symmetry of the vehicle.

12. Tow hitch assembly (1) according to any one of the preceding claims, comprising a locking assembly for locking the tow hitch rod in the position of non-use.

13. Tow hitch assembly (1) according to claim 12, wherein the locking assembly includes a first locking part arranged on the tow hitch rod at a location on the tow hitch rod spaced from the first coupling member, preferably between the location of suspension and the tow hitch ball.

14. Tow hitch assembly (1) according to claim 12 or 13, wherein the locking assembly comprises a release mechanism.

15. Tow hitch assembly (1) according to claim 14, wherein the release mechanism is electro-magnetically operated.

16. Tow hitch assemblyl (1) according to claim 14, wherein the release mechanism includes a hand-operable lever.

17. Tow hitch assembly (1) according to claim 14, 15 or 16, wherein the release mechanism is arranged at a location which can be reached from the outside of the vehicle.

18. Tow hitch assembly (1) according to any one of the preceding claims, comprising an operation member on the tow hitch rod for moving the coupling part to the retracted position, wherein preferably the operation member is arranged on the tow hitch rod at a location between the location of suspension and the tow hitch ball.

19. Tow hitch assembly (1) according to claim 17 or 18, wherein the operation member is a turning knob.

20. Tow hitch assembly (1) according to any one of the preceding claims, wherein in its retracted position the coupling part is biased towards the extended position, wherein the two hitch rod is provided with a release mechanism cooperating with the holder device to trigger the release of the coupling part to permit its movement towards the extended position under the influence of the biasing force.

## Patentansprüche

1. Anhängerkupplungsanordnung (1) umfassend ein Anhängerkupplungselement (2) mit einer Anhängerkupplungsstange mit einem proximalen Ende und einer Anhängerkupplungskugel (3) an einem distalen Ende und eine Halteeinrichtung für das Anhängerkupplungselement (2), wobei die Halteeinrichtung direkt oder indirekt an einem Fahrzeug wie z.B. einem Personenwagen angebracht wird, wobei das Anhängerkupplungselement (2) zwischen einer ausgefahrenen Benutzungsposition, im Wesentlichen parallel zu der Haupt- oder Antriebsachse des Fahrzeugs, und einer eingezogenen Nichtbenutzungsposition in einem Winkel zur Benutzungsposition, insbesondere quer zu der Benutzungsposition, in einer horizontalen Ebene gesehen, beweglich ist, **dadurch gekennzeichnet, dass** das Anhängerkupplungselement (2) an einer Stelle zwischen dem proximalen Ende und dem distalen Ende beweglich an der Halteeinrichtung aufgehängt ist, wobei das proximale Ende der Anhängerkupplungsstange und die Halteeinrichtung mit ersten und zweiten Verbindungselementen versehen sind, die zum verriegelnden Zusammenwirken miteinander in der Benutzungsposition ausgebildet sind, wobei das erste Verbindungselement ein erstes Verbindungsteil (6) umfasst, das bezogen auf die Anhängerkupplungsstange zwischen einer eingezogenen, nicht-verbindenden Position und einer ausgefahrenen, verbindenden Position beweglich ist, wobei das erste Verbindungsteil (6) in der Anhängerkupplungsstange zwischen einer eingezogenen, nicht-verbindenden Position und einer ausgefahrenen, verbindenden Position beweglich ist, wobei die Anhängerkupplungsstange an der Anhängerkupplungsstangenverbindung drehbar mit der Halteeinrichtung verbunden ist, um durch eine geneigte Bewegung der Anhängerkupplungsstange den verbindenden Eingriff zwischen den ersten und zweiten Verbindungselementen herzustellen, vorzugsweise durch Ausüben einer nach unten gerichteten Kraft auf die Kugel.

2. Anhängerkupplungsanordnung (1) nach Anspruch 1, wobei das erste Verbindungsteil eine Verbindungsstange (6) umfasst, die gleitend in der Anhängerkupplungsstange aufgenommen ist und ein Verbindungsende aufweist, das bezogen auf die Anhängerkupplungsstange zwischen einer eingezogenen Position und einer ausgefahrenen, verbindenden Position beweglich ist und das mit dem zweiten Verbindungselement der Halteeinrichtung zusammenwirkt, wobei die Verbindungsstange vorzugsweise auf die ausgefahrene Position hin vorgespannt ist.

3. Anhängerkupplungsanordnung (1) nach Anspruch 1 oder 2, wobei die ersten und zweiten Verbindungselemente eingerichtet sind, um während einer Endphase der Bewegung des Anhängerkupplungselements in die Benutzungsposition in verbindenden Eingriff miteinander gebracht zu werden.

4. Anhängerkupplungsanordnung (1) nach einem der Ansprüche 1-3, wobei das erste Verbindungselement ein Profil umfasst, das an dem proximalen Ende gebildet und bezogen auf die Anhängerkupplungsstange relativ stationär ist, wobei das Profil geformt ist, um zum Zweck des Verbindens hinter einem Abschnitt des zweiten Verbindungselements in Eingriff zu treten.

5. Anhängerkupplungsanordnung (1) nach Anspruch 1, wobei die Anhängerkupplungsstangenverbindung durch ein Gelenk (25) gebildet wird.

6. Anhängerkupplungsanordnung (1) nach Anspruch 1 oder 2 und 5, wobei das Gelenk einen Gelenkbolzen (161) aufweist, der sich durch die Anhängerkupplungsstange erstreckt und mit einem Durchtritt (162) für das bewegliche Verbindungsteil (130) versehen ist.

7. Anhängerkupplungsanordnung (1) nach Anspruch 5 oder 6, wobei das Gelenk eine Gelenkachse aufweist, die eine dominante Richtungskomponente in horizontaler Richtung aufweist, vorzugsweise im Wesentlichen horizontal.

8. Anhängerkupplungsanordnung (1) nach Anspruch 5, 6 oder 7, wobei das Gelenk ein Kugelgelenk ist.

9. Anhängerkupplungsanordnung (1) nach Anspruch 1, wobei die Anhängerkupplungsstange in einer Richtung mit einer dominanten Richtungskomponente in vertikaler Richtung, vorzugsweise im Wesentlichen vertikal, beweglich ist.

10. Anhängerkupplungsanordnung (1) nach einem der vorstehenden Ansprüche, wobei die Anhängerkupplungsstange am Ort der Aufhängung um eine Achse drehbar ist, die eine dominante Richtungskomponente in vertikaler Richtung, wie z.B. im Wesentlichen vertikal aufweist.

11. Anhängerkupplungsanordnung (1) nach Anspruch 9, wobei die Achse zur Vertikalen geneigt ist, vorzugsweise in einer Ebene parallel zu der längsgerichteten vertikalen Symmetrieebene des Fahrzeugs.

12. Anhängerkupplungsanordnung (1) nach einem der vorstehenden Ansprüche, umfassend eine Verriegelungsanordnung zum Verriegeln der Anhängerkupplungsstange in der Nichtbenutzungsposition.

13. Anhängerkupplungsanordnung (1) nach Anspruch 12, wobei die Verriegelungsanordnung ein erstes Verriegelungsteil umfasst, das auf der Anhängerkupplungsstange an einem Ort auf der Anhängerkupplungsstange angeordnet ist, der von dem ersten Verbindungselement beabstandet ist, vorzugsweise zwischen dem Ort der Aufhängung und der Anhängerkupplungskugel.

14. Anhängerkupplungsanordnung (1) nach Anspruch 12 oder 13, wobei die Verriegelungsanordnung einen Lösemechanismus umfasst.

15. Anhängerkupplungsanordnung (1) nach Anspruch 14, wobei der Lösemechanismus elektromagnetisch betrieben ist.

16. Anhängerkupplungsanordnung (1) nach Anspruch 14, wobei der Lösemechanismus einen handbetätigten Hebel umfasst.

17. Anhängerkupplungsanordnung (1) nach Anspruch 14, 15 oder 16, wobei der Lösemechanismus an einem Ort angeordnet ist, der von außerhalb des Fahrzeugs erreichbar ist.

18. Anhängerkupplungsanordnung (1) nach einem der vorstehenden Ansprüche, umfassend ein Betätigungselement an der Anhängerkupplungsstange zum Bewegen des Verbindungsteils in die eingezogene Position, wobei das Betätigungselement vorzugsweise auf der Anhängerkupplungsstange an einem Ort zwischen dem Ort der Aufhängung und der Anhängerkupplungskugel angeordnet ist.

19. Anhängerkupplungsanordnung (1) nach Anspruch 17 oder 18, wobei das Betätigungselement ein Drehknopf ist.

20. Anhängerkupplungsanordnung (1) nach einem der vorstehenden Ansprüche, wobei das Verbindungsteil in seiner eingezogenen Position auf die ausgefahrene Position hin vorgespannt ist, wobei die Anhängerkupplungsstange mit einem Lösemechanismus versehen ist, der mit der Halteeinrichtung zusammenwirkt, um die Lösung des Verbindungsteils auszulösen, um unter dem Einfluss der Vorspannkraft seine Bewegung auf die ausgefahrene Position hin zu ermöglichen.

## Revendications

1. Ensemble de crochet d'attelage (1) comprenant un élément de crochet d'attelage (2) ayant une tige de crochet d'attelage avec une extrémité proximale et une boule de crochet d'attelage (3) au niveau d'une extrémité distale, et un dispositif de support pour l'élément de crochet d'attelage (2), dans lequel le dispositif de support doit être directement ou indirectement monté sur un véhicule, tel qu'une voiture de tourisme, dans lequel l'élément de crochet d'attelage (2) est mobile entre une position étendue d'utilisation, sensiblement parallèle à l'axe principal ou d'entraînement du véhicule, et une position rétractée de non utilisation, selon un angle par rapport à la position d'utilisation, transversal, tel qu'observé dans un plan horizontal, à la position d'utilisation, **caractérisé en ce que** l'élément de crochet d'attelage (2) est suspendu de manière mobile au dispositif de support à un emplacement situé entre l'extrémité proximale et l'extrémité distale, dans lequel l'extrémité proximale de la tige de crochet d'attelage et le dispositif de support sont prévus avec des premier et second éléments de couplage conçus pour se bloquer en coopération entre eux dans la position d'utilisation, dans lequel le premier élément de couplage comprend une première partie de couplage (6) qui est mobile par rapport à la tige de crochet d'attelage entre une position rétractée sans couplage et une position étendue de couplage, dans lequel la première partie de couplage (6) est mobile à l'intérieur de la tige de crochet d'attelage entre une position rétractée sans couplage et une position étendue de couplage, dans lequel, la tige de crochet d'attelage au niveau d'un raccordement de tige de crochet d'attelage est raccordée de manière rotative au dispositif de support afin d'établir la mise en prise de couplage entre les premier et second éléments de couplage par un mouvement d'inclinaison de la tige de crochet d'attelage, de préférence en exerçant une force descendante sur la boule.

2. Ensemble de crochet d'attelage (1) selon la revendication 1, dans lequel, la première partie de couplage comprend une tige de couplage (6) qui est logée de manière coulissante dans la tige de crochet d'attelage et a une extrémité de couplage qui est mobile, par rapport à la tige de crochet d'attelage, entre une position rétractée et une position de couplage étendue coopérant avec le second élément de couplage du dispositif de support, dans lequel de préférence, la tige de couplage est sollicitée vers la position étendue.

3. Ensemble de crochet d'attelage (1) selon la revendication 1 ou 2, dans lequel les premier et second éléments de couplage sont adaptés pour être amenés en mise en prise de couplage l'un par rapport à l'autre pendant une phase de fin du mouvement de l'élément de crochet d'attelage dans la position d'utilisation.

4. Ensemble de crochet d'attelage (1) selon l'une quelconque des revendications 1 à 3, dans lequel le premier élément de couplage comprend un profil formé au niveau de l'extrémité proximale et relativement fixe par rapport à la tige de crochet d'attelage, ledit profil étant formé pour se mettre en prise derrière une partie du second élément de couplage pour des buts de couplage.

5. Ensemble de crochet d'attelage (1) selon la revendication 1, dans lequel le raccordement de tige de crochet d'attelage est formé par une charnière (25).

6. Ensemble de crochet d'attelage (1) selon la revendication 1 ou 2 et 5, dans lequel la charnière a une broche de charnière (161) qui s'étend à travers la tige de crochet d'attelage et est prévue avec un passage (162) pour la partie de couplage mobile (130).

7. Ensemble de crochet d'attelage (1) selon la revendication 5 ou 6, dans lequel la charnière a un axe de charnière qui a une composante de direction dominante dans la direction horizontale, de préférence sensiblement horizontale.

8. Ensemble de crochet d'attelage (1) selon la revendication 5, 6 ou 7, dans lequel la charnière est une charnière à boule.

9. Ensemble de crochet d'attelage (1) selon la revendication 1, dans lequel la tige de crochet d'attelage est mobile dans une direction ayant une composante de direction dominante dans la direction verticale, de préférence sensiblement verticale.

10. Ensemble de crochet d'attelage (1) selon l'une quelconque des revendications précédentes, dans lequel à l'emplacement de suspension, la tige de crochet d'attelage peut tourner autour d'un axe ayant une composante de direction dominante dans la direction verticale, telle que sensiblement verticale.

11. Ensemble de crochet d'attelage (1) selon la revendication 9, dans lequel l'axe est incliné vers la verticale, de préférence dans un plan parallèle au plan vertical longitudinal de symétrie du véhicule.

12. Ensemble de crochet d'attelage (1) selon l'une quelconque des revendications précédentes, comprenant un ensemble de blocage pour bloquer la tige de crochet d'attelage dans la position de non utilisation.

13. Ensemble de crochet d'attelage (1) selon la revendication 12, dans lequel l'ensemble de blocage comprend une première partie de blocage agencée sur la tige de crochet d'attelage à un emplacement sur la tige de crochet d'attelage espacé du premier élément de couplage, de préférence entre l'emplacement de suspension et la boule du crochet d'attelage.

14. Ensemble de crochet d'attelage (1) selon la revendication 12 ou 13, dans lequel l'ensemble de blocage comprend un mécanisme de déblocage.

15. Ensemble de crochet d'attelage (1) selon la revendication 14, dans lequel le mécanisme de déblocage est actionné de manière électromagnétique.

16. Ensemble de crochet d'attelage (1) selon la revendication 14, dans lequel le mécanisme de déblocage comprend un levier à main.

17. Ensemble de crochet d'attelage (1) selon la revendication 14, 15 ou 16, dans lequel le mécanisme de déblocage est agencé à un emplacement qui peut être atteint depuis l'extérieur du véhicule.

18. Ensemble de crochet d'attelage (1) selon l'une quelconque des revendications précédentes, comprenant un élément de commande sur la tige de crochet d'attelage pour déplacer la partie de couplage dans la position rétractée, dans lequel de préférence l'élément de commande est agencé sur la tige de crochet d'attelage à un emplacement situé entre l'emplacement de suspension et la boule du crochet d'attelage.

19. Ensemble de crochet d'attelage (1) selon la revendication 17 ou 18, dans lequel l'élément de commande est une molette rotative.

20. Ensemble de crochet d'attelage (1) selon l'une quelconque des revendications précédentes, dans lequel dans sa position rétractée, la partie de couplage est sollicitée vers la position étendue, dans lequel la tige de crochet d'attelage est prévue avec un mécanisme de déblocage coopérant avec le dispositif de support pour déclencher le déblocage de la partie de couplage afin de permettre son mouvement vers la position étendue sous l'influence de la force de sollicitation.
